# EUROPÄISCHE PATENTSCHRIFT

(11) **EP 0 707 921 B1**
(45) Veröffentlichungstag und Bekanntmachung des Hinweises auf die Patenterteilung: **06.12.2000**
(21) Anmeldenummer: 95115744.5
(22) Anmeldetag: 06.10.1995
(51) Int. Cl.: B23P 15/40, B26D 1/00, B26B 9/00

(54) **Verfahren zur Herstellung eines Messers**
Method of fabricating a knife
Procédé de fabrication d'un couteau

(30) Priorität: 22.10.1994 DE 4437911
(43) Veröffentlichungstag der Anmeldung: 24.04.1996
(73) Patentinhaber: Zwilling J. A. Henckels Aktiengesellschaft, 42657 Solingen (DE)
(72) Erfinder: Wordtmann, Jürgen E., D-42651 Solingen (DE); Gräfe, Horst, D-42279 Wuppertal (DE)
(74) Vertreter: Grundmann, Dirk, Dr.

(56) Entgegenhaltungen:
- EP-A- 0 042 586
- EP-A- 0 567 300
- WO-A-92/19424
- DE-A- 3 139 871
- DE-A- 3 700 250
- FR-A- 2 038 992
- US-A- 2 714 563
- US-A- 3 618 654
- US-A- 3 732 771
- PATENT ABSTRACTS OF JAPAN vol. 8, no. 16 (M-270), 24.Januar 1984 & JP 58 177238 A (TOKYO SHIBAURA DENKI K.K.), 17.Oktober 1983
- PATENT ABSTRACTS OF JAPAN vol. 13, no. 275 (C-610), 23.Juni 1989 & JP 01 073063 A (BABCOCK HITACHI K.K.), 17.März 1989
- PATENT ABSTRACTS OF JAPAN vol. 17, no. 130 (M-1382), 18.März 1993 & JP 04 310325 A (OO ESU JII KK)
- PATENT ABSTRACTS OF JAPAN vol. 13, no. 484 (M-886), 2.November 1989 & JP 01 190386 A (KAWATETSU TECHNO RES CORP), 31.Juli 1989

## Beschreibung

Die Erfindung betrifft ein Verfahren zum Herstellen von flammspritzbeschichteten Messern, Messerklingen oder dergleichen.

Ein derartiges Verfahren zur Herstellung eines solchen ist aus der US-A 3,732,771 bekannt. Dort soll der aus hartem Stahl bestehende Klingenkörper einer Messerklinge einseitig mit einer Hartstoffbeschichtung versehen werden. Als Beschichtung ist dort eine unter anderem flammaufgespritzte Chromschicht vorgesehen. Die Schicht soll härter sein als der Werkstoff des stählernen Klingenkörpers. Die US-PS geht von der Vorstellung aus, daß sich eine so beschichtete Messerklinge von der unbeschichteten Seite derart abziehen läßt, daß die Wate von einer Kante der Beschichtung ausgebildet wird. In der makroskopischen Darstellung im gattungsbildenden Stand der Technik soll sich der angeschliffene Oberflächenabschnitt der Beschichtung einem angeschliffenen Oberflächenabschnitt des stählernen Bereichs anschließen. Es hat sich in der Praxis gezeigt, daß bei Messerklingen, die nach dem dort offenbarten Verfahren gefertigt worden sind, mikroskopisch keine derartige Watenausbildung aufweisen. Mikroskopisch betrachtet schließt sich der angeschliffene Oberflächenabschnitt nicht stufenlos, also insbesondere nicht fluchtend an den angeschliffenen stählernen Oberflächenabschnitt an.

Auch bei dem Verfahren gemäß der DE-PS 37 00 250 liegt mikroskopisch eine andere Struktur vor, als sie in der Beschreibung beschrieben wird. Diese anders geartete Struktur, die dadurch entsteht, daß beim Abziehen der beschichtungsfreien Breitseitenfläche die Beschichtung spitzenseitig abplatzt, hat zur Folge, daß der in den Beschreibungen der eingangs genannten Schriften gewollte selbstschärfende Effekt nicht auftritt. Die Schnittfunktion erfolgt bei den gemäß dem Stand der Technik beschichteten Klingen nicht mit der Kante der Beschichtung, sondern mit der Stufe des Klingenkörpers im Bereich der Grenzschicht zwischen Schicht und Substrat.

Der Erfindung liegt die Aufgabe zugrunde, diesen Nachteil beim Stand der Technik dadurch zu beheben, daß der watenseitige Anschluß der Schicht an das Substrat mikroskopisch derart gestaltet ist, daß die tatsächlich wirkende Schneide nicht von dem stählernen Klingenkörper ausgebildet wird.

Gelöst wird die Aufgabe durch das im Anspruch 1 angegebene Messer und durch das im Anspruch 1 angegebene Verfahren, sowie durch das im Anspruch 6 angegebenen zwischen produkt.

Die Unteransprüche stellen vorteilhafte Weiterbildungen der Erfindung dar.

Bei einer bevorzugten Ausgestaltung eines erfindungsgemäß hergestellten Messers, bei welchem der angeschliffene Oberflächenabschnitt der Beschichtung, welcher sich stufenlos an den angeschliffenen stählernen Oberflächenabschnitt des Klingenkörpers anschließt, eine geringere Rauhtiefe aufweist als die Breitseitenoberfläche der Beschichtung, ist eine weiter verbesserte Schnittleistung gegeben. Es kann weiter vorgesehen sein, daß die Rauhtiefe des angeschliffenen Oberflächenabschnittes im wesentlichen identisch ist mit der Rauhtiefe des angeschliffenen Oberflächenabschnitts des stählernen Klingenkörpers. Die Rauhtiefe der Breitseitenoberfläche der Beschichtung kann etwa 10 µm oder weniger betragen. Die Rauhtiefe des angeschliffenen Oberflächenabschnittes der Beschichtung kann etwa 5 µm oder weniger betragen. Es hat sich beim Flammspritzbeschichten gezeigt, daß der stählerne Klingenkörper aufgeheizt wird. Diese Temperaturerhöhung im Bereich der beschichteten Oberfläche führt zu einem Anlassen und einer Härteverringerung im Bereich der Grenzschicht. Beim Stand der Technik weist die Anlaßzone eine sehr hohe Dicke auf, so daß die Haftung der Beschichtung auf dem Klingenkörper nicht optimal ist, mit der eingangs genannten Folge, daß die Beschichtung abplatzt. Erfindungsgemäß ist nun vorgesehen, daß die Anlaßzone eine minimierte Dicke aufweist. Die Dicke der Anlaßzone ist dabei geringer als die Dicke der Beschichtung und bevorzugt geringer als 5 oder 10 µm. Zufolge dieses Merkmales bleibt der Klingenkörper im Kern in seiner Härte durch das Flammspritzen unbeeinflußt. Lediglich in einer sehr dünnen Zone im Bereich der Grenzfläche, welche bevorzugt so dünn ausgebildet ist, daß sie nicht mehr nachweisbar ist, ist der Klingenkörper angelassen und weist eine geringere Härte auf. Die Dicke der Beschichtung liegt -abhängig vom verwendeten Material- bevorzugt zwischen 10 und 60 µm. Es hat sich herausgestellt, daß eine optimale Schichtdicke etwa 30 bis 40 µm beträgt. Durch diese Schichtdicke wird einerseits ein noch genügend großer anschleifbarer Oberflächenbereich der Beschichtung ausgebildet und andererseits ist die Schicht dünn genug, um nicht abzuplatzen. Es kann ferner vorgesehen sein, daß sich die Dicke der Anlaßzone über die gesamte beschichtete Breitseitenfläche homogen erstreckt, also im wesentlichen eine gleichbleibende Dicke aufweist. Die Beschichtung besteht aus einem harten Trägermaterial, in welchem Hartstoffteilchen eingebettet sind. Die Dicke der Anlaßzone soll dabei maximal 10 mal so groß sein wie die Dicke der Hartstoffteilchen. Durch diese Größenauswahl ist sichergestellt, daß die beim Beschichten sich in die Oberfläche eingrabenden Hartstoffteilchen eine optimale Anhaftung mit der weicheren Klingenkörperzone eingehen. Die Hartstoffteilchen können aus Wolframcarbid bestehen und das Trägermaterial aus Kobalt. Die Hartstoffteilchen und das Trägermaterial können in einem Verhältnis von 80 zu 20 bis 90 zu 10 zusammengesetzt werden. Bevorzugt ist ein Verhältnis von 88 zu 12. In einer derzeit nicht bevorzugten Ausgestaltung kann zusätzlich zu einer ersten, aus Wolframcarbid/Kobalt bestehenden Komponente eine zweite Komponente der Schicht vorgesehen sein, welche insbesondere Nickel, Chrom, Bor und/oder Silizium aufweist. Die zweite Komponente soll dann weniger als 50 % betragen, bevorzugt 30 % der Schichtzusammensetzung. Die Härte der Beschichtung liegt bevorzugt weit oberhalb der Härte des Klingenkörpers. Für eine Beschichtung mit Wolframcarbid-Körnern wird in der Literatur eine Härte von 1.800 HV 0,3 angegeben. Diese Härte steht einer Härte des Klingenkörpers von etwa 650 HV 0,3 gegenüber. Die Härte der Anlaßzone ist geringer als die Härte des Klingenkörpers und kann etwa 550 HV 0,3 betragen.

Das erfindungsgemäße Verfahren zum Herstellen einer Messerklinge sieht vor, daß auf dem gehärteten Klingengrundkörper einseitig eine Hartstoffbeschichtung hochgeschwindigkeits-flammaufgespritzt wird und daß anschliessend die Klinge anderseitig abgezogen wird. Dabei ist vorgesehen, daß der zu beschichtende Oberflächenbereich vor dem Hartstoffbeschichten mit einem abrasiven Granulat bestrahlt wird. Hierdurch soll sich die Rauhtiefe der zu beschichtenden Oberfläche ändern. Die Bestrahlung mit dem Granulat erfolgt derart, daß die Scheitelzone des Klingenkörpers zufolge des Strahldruckes seitwärts ausweicht. Im Querschnitt durch einen bestrahlten Klingenkörper bildet sich dann watenseitig eine seitlich ausweichende Nase aus. Diese Nase wird beim anschließenden Flammspritzbeschichten mitbespritzt und anschließend abgeschliffen. Bevorzugt erfolgt die Hartstoffbeschichtung mit Überschallgeschwindigkeit. Das in die Flamme eingebrachte pulverförmige Beschichtungsmaterial soll in der Flamme auf etwa 2000 bis 3000° C aufgeheizt werden. Um zu vermeiden, daß sich während des Flammspritzbeschichtens die Breitseitenfläche des Klingenkörpers unzulässig hoch aufheizt, wird die Klinge in mehreren aufeinanderfolgenden Schritten mit jeweils einer dünnen Teilschicht beschichtet wird. Zwischen dem Auftrag der einzelnen Teilschichten bekommt so die Oberfläche Gelegenheit, sich wieder abzukühlen. Auch braucht wegen des in den einzelnen Teilschritten jeweils abgeschiedenen geringen Materials weniger Wärme abgeführt werden. Bevorzugt soll sich beim Beschichten die Oberfläche des Klingenkörpers kurzfristig nur maximal bis auf 400° C aufheizen. Die gegenüberliegende Seite soll dabei maximal 80° erreichen. Lediglich im Bereich der Scheitelzone, welche später abgeschliffen wird, ist eine höhere Temperatur zulässig. Bei diesem Verfahren wird die weichere Anlaßzone bis auf ein nicht mehr nachweisbares Minimum reduziert. Das Abziehen der Klinge soll bevorzugt in mehreren aufeinanderfolgenden Schritten erfolgen. Bevorzugt erfolgt im ersten Abziehschritt die erwähnte Abtragung der Scheitelzone. Dabei wird ein Abplatzen der Beschichtung in diesem Bereich in Kauf genommen. In ein oder mehreren zweiten Abziehschritten kann der Klingenkörper und die Beschichtung dann so weit abgezogen werden, daß die abgezogenen Oberflächenbereiche von Klingenkörper und Schicht x zueinander fluchten. Die Wärmebeaufschlagung beim Hochgeschwindigkeits-Flammbespritzen ist in Kombination mit der Beaufschlagungszeit so gewählt, daß weder an der Wate, noch an der Breitseitenfläche beim fertigen Messer im Gebrauch eine Lochfraßkorrosion auftritt. Die Beschichtungsparameter sind vorzugsweise so gewählt, daß die thermische Beanspruchung des Klingenkörpers zu keinen schädlichen Spannungen im Klingenkörper führt.

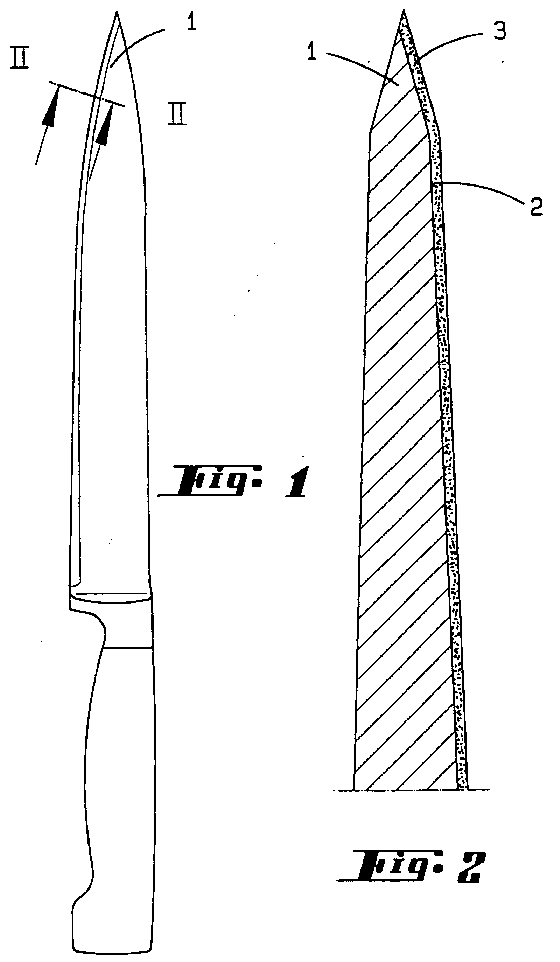

Ein Ausführungsbeispiel der Erfindung wird nachfolgend anhand beigefügter Zeichnungen erläutert. Es zeigt
- Fig. 1: ein erfindungsgemäß hergesteltes Messer in Ansicht,
- Fig. 2: einen Schnitt gemäß der Linie II-II in Fig. 1,
- Fig. 3: die mikroskopische Darstellung des Watenbereiches eines nach dem Verfahren gemäß Stand der Technik hergestellten Messers,
- Fig. 4: die mikroskopische Darstellung des Watenbereiches eines unbestrahlten/unbeschichteten Klingenkörpers im Bereich der Wate,
- Fig. 5: eine Darstellung gemäß Fig. 4 nach dem Bestrahlen,
- Fig. 6: eine Folgedarstellung gemäß Fig. 5 nach dem Beschichten,
- Fig. 7: eine Folgedarstellung von Fig. 6 nach dem ersten Abziehen,
- Fig. 8: eine vergrößerte Folgedarstellung nach Fig. 7 nach dem letzten Abziehen,
- Fig. 9: eine vergrößerte Darstellung des Watenbereiches eines erfindungsgemäß hergestellten Messers,
- Fig. 10: eine vergrößerte Darstellung des beschichten Zwischenproduktes vor dem erstmaligen Abziehen und
- Fig. 11: eine schematische Darstellung des Härteverlaufs entlang der Linie XI-XI in Fig. 9.

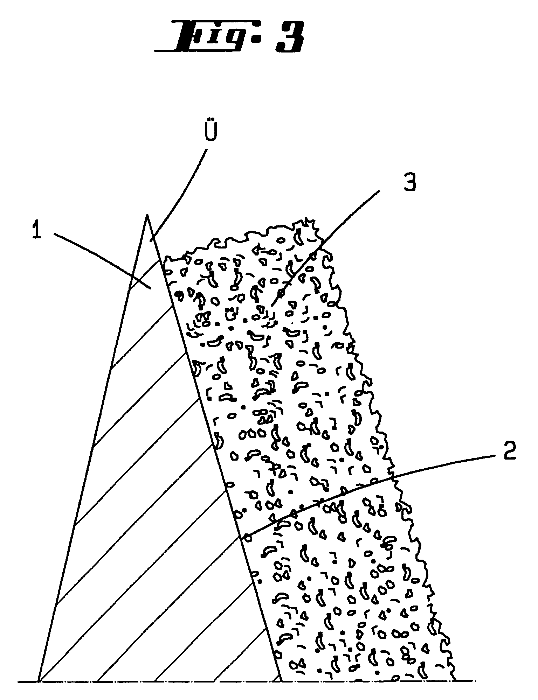

Der Ausgangspunkt der Erfindung ist in der Fig. 3 dargestellt. Es handelt sich dort um einen Schnitt durch den Watenbereich einer Klinge, die gemäß dem eingangs genannten Stand der Technik beschichtet worden ist. Es bildet sich bei diesem Messer zwar eine Kante (Überstand Ü) aus, die von zwei Flächen der Schicht ausgebildet wird, jedoch ist diese Kante nicht die Schneidkante. Die Schneidkante wird vom stählernen Grundkörper 1 ausgebildet, und zwar von einem Vorsprung, an welchen sich die zu beschichtende Breitseitenfläche 2 anschließt. Bei der in Fig. 3 dargestellten mikroskopischen Darstellung zeigt sich, daß die Haftung der Beschichtung 3 an der Grenzschicht 2 nur unzureichend ist. Beim Schneidvorgang wird die Stirnfläche der Beschichtung nicht abgerieben. Es platzen vielmehr Bruchstücke der Schicht von der Grenzschicht 2 ab, so daß im Schneidenbereich die Schicht keine Bedeutung hat.

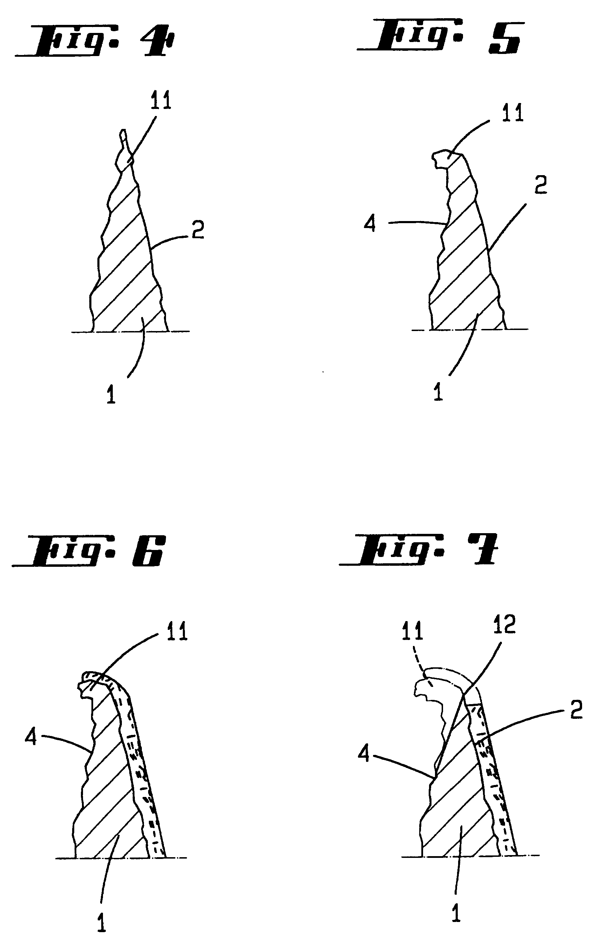

Das erfindungsgemäß hergestelltes Messer weist einen Klingenkörper 1 auf, welcher aus gehärtetem Stahl besteht. Gemäß Fig. 4 ist der zu beschichtende Rohling zur Wate hin angeschliffen. Hierdurch ergibt sich eine zur Schneide hin scharfe Scheitelzone 11, die die beiden gegenüberliegenden Breitseitenflächen 2 und 4 teilt. Die beiden Breitseitenflächen 2 und 4 stoßen im Scheitelbereich 11 in einem spitzen Winkel aufeinander.

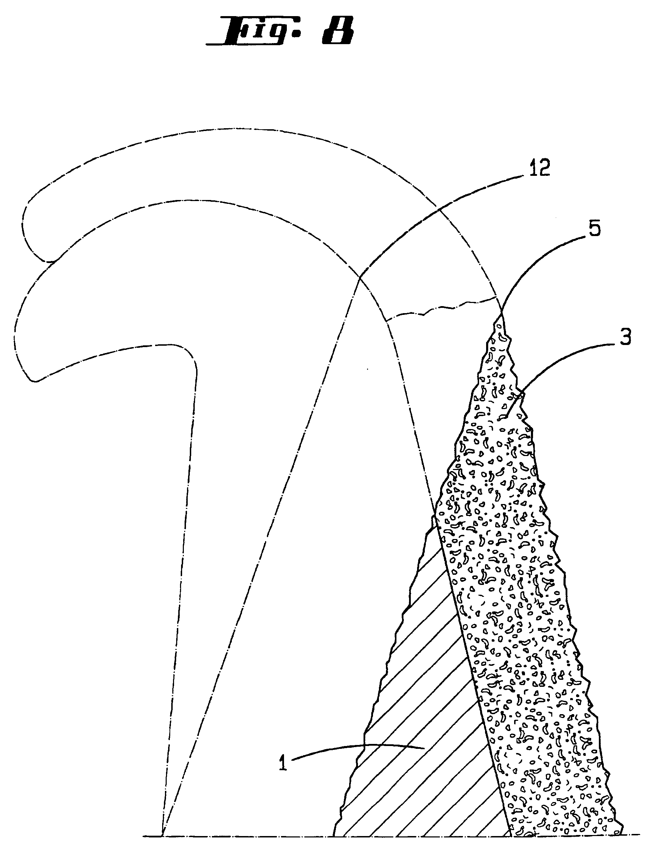

Nach dem Fertigen des Rohlings gemäß Fig. 4 wird der Rohling im watenseitigen Bereich einer Breitseitenfläche 2 mit Granulat bestrahlt. Die Granulatteilchen sind feinkörnig und abrasiv. Die Breitseitenfläche 2 wird durch diese Bestrahlung aufgerauht. Die Bestrahlung erfolgt mit einer derartigen Intensität und Dauer, daß der Scheitelbereich 11 in die dem Stahl abgewandte Richtung umgebogen wird. Im Querschnitt entsteht dadurch eine nasenförmige Abbiegung (vergl. Fig. 5).

In einem folgenden Verfahrensschritt wird die bestrahlte Breitseitenfläche 2 mit einer Hartstoffbeschichtung versehen. Der Hartstoff besteht aus Wolframcarbidteilchen von ca. 1 µm Durchmesser. Die Wolframcarbidteilchen werden in einer Matrix aus Kobalt eingebettet. Die Beschichtung erfolgt im Flammspritzverfahren. Dabei wird das Schichtmaterial pulverförmig in eine Flamme gegeben und mittels der Flamme auf ca. 2000 bis 3000° C aufgeheizt. Die so aufgeheizte Masse wird dann mit sehr hoher Geschwindigkeit, nämlich einer Überschallgeschwindigkeit, auf das von der Breitseitenfläche 2 des Klingenkörpers 1 gebildete Substrat aufgebracht.

Es wird zunächst eine sehr dünne erste Schicht aufgetragen, in welcher die Hartstoffteilchen auch in die behandelte Oberfläche der Breitseitenfläche 2 eintauchen und sich dort verankern. Die dünne Schichtauftragung erfolgt dadurch, daß der Strahl mit entsprechender Geschwindigkeit die Breitseitenfläche 2 des Messers bestreicht. Die Geschwindigkeit und die Strahlintensität sind so gewählt, daß sich die Oberfläche der Breitseitenfläche bei dieser Beschichtung auf höchstens 400° C erwärmt, auf eine Temperatur also, bei welcher keine störende Materialaufweichung stattfindet. In weiteren Beschichtungsschritten werden nach und nach eine Vielzahl von dünnen Schichten aufgetragen, bis die Solldicke der Schicht 3 erreicht ist.

Das Beschichtungsmaterial besteht aus einer Mischung von Wolframcarbidteilchen und Kobalt in einem Mischungsverhältnis von 88 zu 12. In eben diesem Verhältnis ist dann auch die Schicht zusammengesetzt. Die Schicht 3 erstreckt sich über den watenseitigen Endabschnitt der Breitseitenfläche 2 bis über die Mittelebene des Watenbereichs des Klingenkörpers hinaus in Richtung auf die unbeschichte Breitseitenfläche, da die Scheitelzone 11 in Richtung der Leeseite gebogen ist. Es ist zulässig, daß sich beim Beschichten die Scheitelzone 11 auf eine höhere Temperatur aufheizt, als die übrige zu beschichtende Breitseitenfläche 2. Die Temperatur, auf welche sich die Scheitelzone 11 aufheizt, kann dabei sogar so groß sein, daß die gesamte Scheitelzone eine Materialerweichung erfährt.

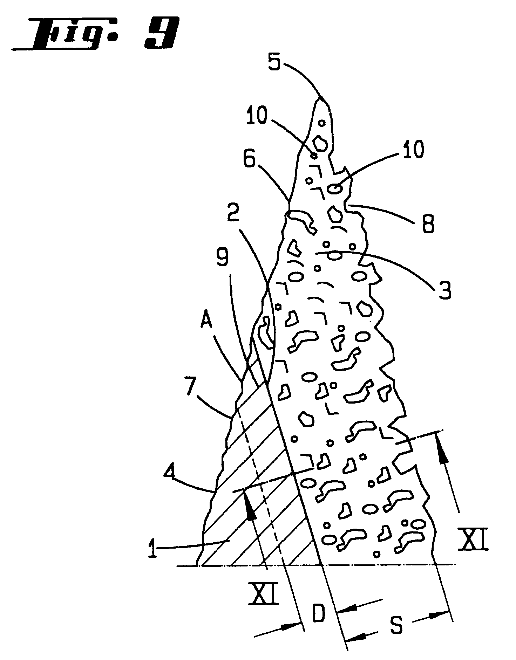

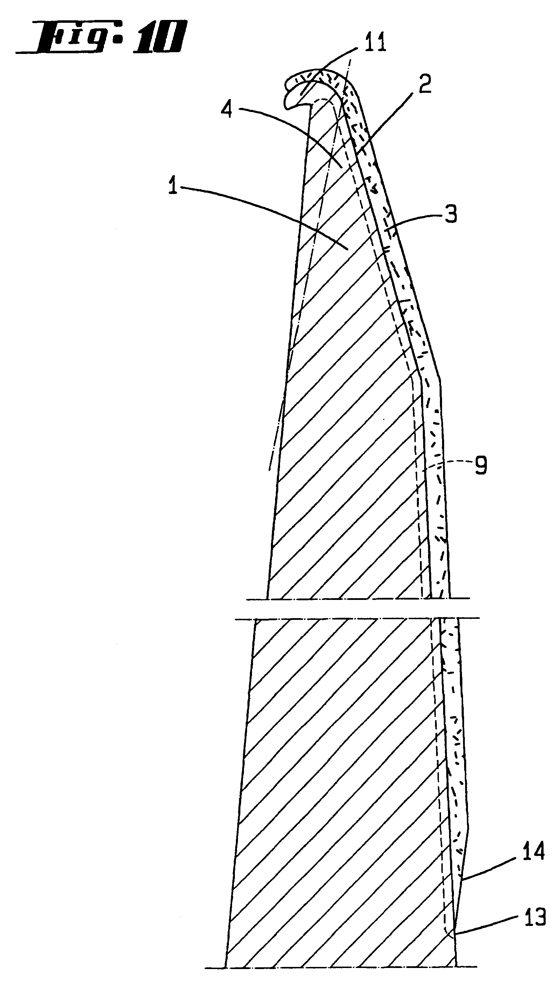

In dem in Fig. 7 dargestellten Verfahrensschritt wird in einem ersten Abziehschritt in bekannter Weise die Wate von der nicht beschichteten Seite 4 her abgezogen. Das Abziehen erfolgt mit einem Abziehstein, welcher rotiert. In dem in Fig. 7 dargestellten Verfahrensschritt wird die gesamte Scheitelzone 11 abgetragen. Dabei wird in Kauf genommen, daß ein Teilbereich der Beschichtung 2 an der Grenzfläche zwischen Schicht und Substrat abplatzt. Hierdurch bildet sich ein Vorsprung 12 aus. Dieser Vorsprung 12 wird in nachfolgenden Abziehschritten (vergl. Fig. 8) weiter abgetragen, bis der Anschliff A aus zwei fluchtenden Flächenabschnitten 6 und 7 besteht, wobei der Flächenabschnitt 6 der Schicht 3 und Flächenabschnitt 7 dem stählernen Klingenkörper 1 zugeordnet ist. Während des Abziehens wird der Anschliff geglättet, so daß der Oberflächenabschnitt 6 eine geringere Rauhtiefe aufweist als der Oberflächenabschnitt 8, welcher durch die Flammbeschichtung entstanden ist. Von der Kante 5 wird die Wate ausgebildet. Die Oberflächenabschnitte 6 und 8 treten dabei in einem Winkel von bevorzugt 22 bis 24° aufeinander. In Fig. 9 ist die tatsächlich erreichte Struktur des Watenabschnittes wiedergegeben. Die Flächenabschnitte 6 und 7 gehen stufenlos ineinander über und haben dieselbe Rauhigkeit (Rauhtiefe), welche geringer ist als die Rauhtiefe der Fläche 8. Die Dicke D beträgt im Ausführungsbeispiel weniger als 1 µm und ist deshalb in den Figuren überproportional groß dargestellt. Die Dicke S der Hartstoffbeschichtung beträgt 30 µm.

Der Anschliff A erfolgt in einem spitzen Winkel (22 bis 24°) zur unbeschichteten Breitseite hin, so daß sich eine Schneide 5 ausbildet mit einem stumpferen Winkel, als der Scheitelwinkel des Scheitels 11 des Rohlings (Fig. 4). Die Länge des abgezogenen stählernen Abschnittes ist um ein Vielfaches länger, als die Länge des Abschnitts 6. Bei einer typischen Schichtdicke von etwa 30 µm ist somit ein Anschliff A gegeben, bei welchem mikroskopisch die Schichtabschnitte 6 und 7 fluchtend ineinander übergehen, so daß gewährleistet ist, daß die Wate von der Kante 5 der Beschichtung ausgebildet wird. Abhängig von der Härte des Schichtmaterials erfolgt die Wahl der Schichtdicke so, daß diese bei der bestimmungsgemäßen Verwendung des Messers nicht abplatzt. Als weiterer Parameter hat die Dicke der Anlaßzone eine Bedeutung; ihre Dicke ist so gewählt, daß eine optimale Verankerung der Beschichtung durch die in die Oberfläche 2 des Stahlkörpers eintretenden WC-Körnchen gegeben ist.

Der Verlauf der Härte im Watenabschnitt ist in der Fig. 11 dargestellt. Die Beschichtung 3 weist auf ihrer Dicke S eine im wesentlichen konstante Härte auf, nämlich etwa 1800 HV 0,3. Im Bereich der Grenzfläche sinkt die Härte sprunghaft ab auf einen Wert, der etwa 550 HV 0,3 beträgt. Dieser Wert ist der Anlaßzone 9 zugeordnet. Über die Dicke D der Anlaßzone 9 steigt die Härte kontinuierlich zu größeren Tiefen T an bis auf die Härte des Volumenmaterials des Klingenkörpers 1; hier ist die Härte 650 HV 0,3.

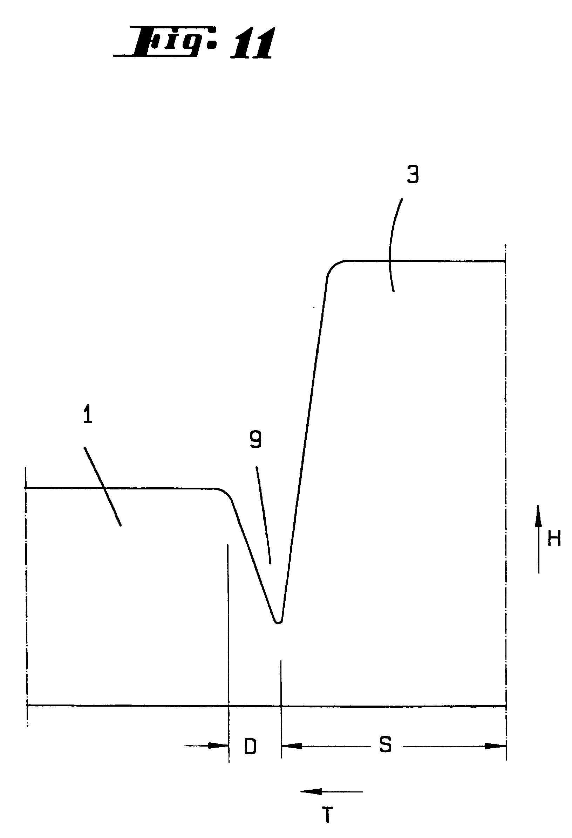

Wie der Fig. 10 zu entnehmen ist, ist die Dicke der Anlaßzone 9 über die gesamte Querschnittserstreckung der Schicht 3 konstant dick. In Fig. 10 ist die Dicke vergrößert dargestellt. Im Idealfall ist sie wesentlich kleiner als 1 µm, also durch Anätzen oder dergleichen nicht nachweisbar. Das Ende der Grenzschicht 9 ist durch die gestrichelte Linie dargestellt. Im Bereich der Scheitelzone 11 ist eine höhere Dicke der Anlaßzone 9 zugelassen. Im Ausführungsbeispiel ist der gesamte Scheitel 11 der Anlaßzone 9 zugeordnet. Es ist jedoch vorgesehen, daß dieser Abschnitt, bei dem die Anlaßzone dicker ist, als im übrigen beschichteten Abschnitt, später abgetragen wird. Im watenentfernten Bereich 14 der Schicht 3 läuft die Schicht kontinuierlich aus. Die Grenze (gestrichelte Linie) der Anlaßzone 9 geht hier bis an die Breitseitenoberfläche, so daß ein angelassener Oberflächenbereich 13 entsteht, dessen Erstreckung der Dicke D der Anlaßzone 9 entspricht.

## Patentansprüche

1. Verfahren zum Herstellen eines Messers oder einer Klinge mit Schneidkante, wobei die eine Breitseitenfläche (2) des aus gehärtetem Stahl bestehenden Klingenkörpers (1) durch Flammspritzen mit in ein hartes Trägermaterial eingebetteten Hartstoffteilchen beschichtet wird, wobei die zweite Breitseitenfläche (4) unbeschichtet bleibt und die Wate durch einen Anschliff von der unbeschichteten Seite her von einer Kante der Schicht (3) derart ausgebildet wird, daß der angeschliffene Oberflächenabschnitt (6) der Beschichtung sich an den angeschliffenen stählernen Oberflächenabschnitt (7) des Klingenkörpers (1) anschließt, wobei daß der zu beschichtende Oberflächenbereich (2) vor dem Hartstoffbeschichten mit einem abrasivem Granulat bestrahlt wird derart, daß die Scheitelzone (11) des Klingengrundkörpers (1) zufolge des Strahldruckes seitlich ausweicht und daß die Hartstoffbeschichtung in Form einer Vielzahl von nacheinander aufgetragenen dünnen Teilschichten erfolgt, so daß die Dicke (D) der aus dem Flammspritzen resultierenden Anlaßzone (9) nach dem Anschliff der zweiten, unbeschichteten Breitseitenfläche (4) (9) geringer ist als die Dicke (S) der Beschichtung (3) und bevorzugt kleiner als 10 µm oder 5 µm ist.

2. Verfahren nach Anspruch 1, dadurch gekennzeichnet, daß beim Beschichten die beschichtete Seitenfläche (2) des Klingenkörpers (1) kurzfristig maximal 400° C erreicht, wobei in Bereich der Scheitelzone (11) eine höhere Temperatur zulässig ist.

3. Verfahren nach einem der vorhergehenden Ansprüche, dadurch gekennzeichnet, daß die Hartstoff-Flammbeschichtung bei einer Temperatur von 2000° bis 3000° C erfolgt.

4. Verfahren nach einem der vorhergehenden Ansprüche, dadurch gekennzeichnet, daß in einem ersten Abziehschritt die seitlich ausweichende Scheitelzone (11) abgetragen wird unter Inkaufnahme eines dabei erfolgenden Abplatzens der Beschichtung.

5. Verfahren nach einem der vorhergehenden Ansprüche, dadurch gekennzeichnet, daß in ein oder mehreren zweiten Abziehschritten von der Beschichtung (3) und vom Klingenkörper (1) so viel Material abgetragen wird, daß die beiden abgezogenen Oberflächenabschnitte (6 und 7) zueinander fluchten.

6. Zwischenprodukt eines Messers oder einer Klinge mit Schneidkante, resultierend aus dem Verfahren nach Anspruch 1 nach der Hartstoffbeschichtung und von dem Anschliff der zweiten, unbeschichteten Breitseitenfläche (4) welches einen aus gehärtetem Stahl bestehenden Klingenkörper (1) aufweist, dessen eine Breitseitenfläche (2) eine flammengespritzte Hartstoffbeschichtung (3) aufweist, dessen zweite Breitseitenfläche (6) unbeschichtet ist und bei dem durch einen Anschliff (A) von der unbeschichteten Seite her die Wate von einer Kante (5) der Schicht (3) ausgebildet werden soll, wobei die Beschichtung in ein hartes Trägematerial aus Kobalt eingebettete Hartstoffteilchen aus Wolframcarbid aufweist, wobei die Hartstoffteilchen und das Trägermaterial in einem Verhältnis von 80 zu 20 bis 90 zu 10 aufgetragen sind und die Dicke der Beschichtung zwischen 10 und 60 µm liegt, mit einer in Gegenrichtung der Schicht (3) seitlich ausweichenden Scheitelzone (11) des Klingenkörpers (1), welcher bis über die Mittelebene der Klingenspitze hinaus beschichtet ist.

## Claims

1. Method for the production of a knife or a blade having a cutting edge, one lateral face surface (2) of the blade body (1) consisting of hardened steel being coated by flame spraying with particles of hard material embedded in a hard support material the second lateral face surface (4) remaining uncoated and the facet of the blade being constructed by grinding from the uncoated side of an edge of the layer (3) in such a way that the ground surface section (6) of the coating adjoins the ground steel surface section (7) of the blade body (1), the surface region (2) to be coated being blasted prior to coating with the hard material by an abrasive granular material in such a way that the apex zone (11) of the blade base body (1) deviates to the side as a result of the jet pressure and that the coating with hard material ensues in the form of numerous thin partial layers applied one after the other so that the thickness (D) of the tempering zone (9) resulting from the flame spraying is less after the grinding of the second, uncoated lateral face surface (4) than the thickness (S) of the coating and is preferably less than 10 µm or 5 µm.

2. Method according to Claim 1, characterised in that during coating the coated lateral surface (2) of the blade body (1) briefly reaches a maximum of 400 °C, a higher temperature being permissible in the region of the apex zone (11).

3. Method according to one of the preceding claims, characterised in that the flame coating with hard material ensues at a temperature of 2000 ° to 3000 °C

4. Method according to one of the preceding claims, characterised in that in a first whetting step the apex zone (11) deviating to the side is stripped away any flaking off of the coating in doing so being accepted.

5. Method according to one of the preceding claims, characterised in that in one or more whetting steps so much material is removed from the coating (3) and from the blade body (1) that the two whetted surface sections (6 and 7) are in alignment with one another.

6. Intermediate product of a knife or a blade having a cutting edge resulting from the method according to Claim 1 following coating with hard material and prior to grinding of the second, uncoated lateral face surface (4) which possesses a blade body (1) consisting of hardened steel one lateral face surface (2) of which has a flame-sprayed coating (3) of hard material, the second lateral face surface (6) of which is uncoated and in which by means of a grinding action (A) from the uncoated side the facet of the blade should be constructed from an edge (5) of the layer (3), the coating possessing hard material particles of tungsten carbide embedded in a hard support material composed of cobalt, the particles of hard material and the support material being applied in a ratio of 80 to 20 up to 90 to 10 and the thickness of the coating lying between 10 and 60 µm having an apex zone (11) of the blade body (1) deviating to the side in the direction opposite to that of the layer (3) which blade body is coated up to beyond the middle plane of the blade tip.

## Revendications

1. Procédé de fabrication d'un couteau ou d'une lame munie d'une arête de coupe, dans lequel une première des surfaces latérales larges (2) du corps de lame (1) réalisé en acier trempé est revêtue par projection à la flamme de particules en matières dures noyées dans un matériau de support, dans lequel la deuxième surface latérale large (4) reste non revêtue, tandis que l'arête de coupe est constituée par un affûtage de la face non revêtue qui est réalisé à partir d'une arête de la couche (3), de telle façon que le tronçon de surface affûté (6) du revêtement se raccorde au tronçon de surface (7) affûté et réalisé en acier du corps de lame (1), dans lequel la zone de surface (2) à revêtir est revêtue par projection, avant le revêtement par une matière dure, d'un granulat abrasif, de telle façon que la zone de crête (11) du corps de base (1) de la lame, sous l'effet de la pression de l'acier se gauchisse ou s'affaisse latéralement, et dans lequel le revêtement en matière dure est réalisé sous la forme d'une pluralité de couches partielles minces appliqués les unes sur les autres, de sorte que l'épaisseur (D) de la zone de démarrage (9) résultant de la projection à la flamme, après l'affûtage des deuxièmes surfaces latérales larges non revêtues (4), soit plus petite que l'épaisseur (S) du revêtement (3) et de préférence soit inférieure à 10 µm ou à 5 µm.

2. Procédé selon la revendication 1, caractérisé en ce qu'au cours du revêtement, la surface latérale (2) revêtue du corps de lame (1) atteint, pendant un temps court, au maximum 400°C, une température plus élevée étant admissible dans la zone de crête (11).

3. Procédé selon l'une des revendications précédentes, caractérisé en ce que le revêtement à la flamme par une matière dure est réalisé à une température comprise entre 2000°C et 3000°C.

4. Procédé selon l'une des revendications précédentes, caractérisé en ce qu'au cours d'une première étape de retrait (par moulage), on enlève la zone de crête ou de pointe (11) affaissée latéralement, par accommodation d'un écaillage du revêtement se produisant dans cette zone.

5. Procédé selon l'une des revendications précédentes, caractérisé en ce qu'au cours d'une ou plusieurs deuxièmes étapes de retrait (par moulage) du revêtement (3) et du corps de lame (1), on enlève suffisamment de matériau pour que les deux tronçons de surface (6 et 7) éliminés soient alignés l'un sur l'autre.

6. Produit intermédiaire d'un couteau ou d'une lame munie d'une arête de coupe résultant du procédé selon la revendication 1 après le revêtement en matière dure et avant l'affûtage de la deuxième surface latérale large (4) non revêtue, le produit comprenant un corps de lame (1) réalisé en acier trempé, dont une surface latérale large (2) comporte un revêtement (3) en matière dure projetée à la flamme, dont une deuxième surface latérale (6) est non revêtue, et dans lequel l'arête de coupe d'un bord (5) de la couche (3) doit être formée par un affûtage par moulage (A) de la face non revêtue, produit dans lequel le revêtement est constitué par des particules de matière dure en carbure de tungstène noyées dans un matériau support dur en cobalt, et dans lequel les particules de matière dure et le matériau support sont appliqués selon un rapport de 80 à 20, jusqu'à 90 à 10, et l'épaisseur du revêtement est comprise entre 10 et 60 µm, avec une zone de crête (11) du corps de lame (1) s'affaissant latéralement, et qui est revêtue à l'extérieur jusque sur le plan médian de la pointe de lame.
